# EUROPEAN PATENT APPLICATION

(11) **EP 4 848 809 A1**
(43) Date of publication of application: **02.12.2026**
(21) Application number: 24923525.0
(22) Date of filing: 13.12.2024
(51) Int. Cl.: H04W 36/00

(54) **COMMUNICATION METHOD AND COMMUNICATION APPARATUS**

(30) Priority: 08.02.2024 CN 202410177390
(71) Applicant: Huawei Technologies Co., Ltd., Shenzhen, Guangdong 518129 (CN)
(72) Inventor: LI, Haoran, Shenzhen, Guangdong 518129 (CN); XU, Yishan, Shenzhen, Guangdong 518129 (CN); XU, Shengfeng, Shenzhen, Guangdong 518129 (CN); SUN, Haiyang, Shenzhen, Guangdong 518129 (CN)
(74) Representative: Gill Jennings & Every LLP
(86) International application number: PCT/CN2024/139088
(87) International publication number: WO 2025/167323

(57) **Abstract**

This application provides a communication method and a communication device. When a terminal device supports a dual steer capability, a unified data management function network element sends subscription data including first information, and the first information may indicate a network that supports the dual steer capability and that is provided for the terminal device, so that the terminal device can select, based on a service requirement of the terminal device, to access a network that supports the dual steer capability. Compared with an existing solution in which all networks that can be accessed are provided for the terminal device, the technical solution in this application helps reduce signaling overhead and ensure service latency, thereby improving service experience of a user.

## Description

This application claims priority to Chinese Patent Application No. 202410177390.3, filed with the China National Intellectual Property Administration on February 8, 2024, and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

The concept of a dual steer device (dual steer device) is introduced in standardization discussion of release 19 (release 19, R19). In addition, network capabilities are enhanced in R19, by defining some networks to support dual steer (dual steer). In existing mechanisms, a terminal device obtains subscription data through a registration procedure, and a network list included in the subscription data includes all networks that the terminal device is allowed to access. In this case, if the terminal device supports a dual steer capability, and subsequently needs to access a network that supports dual steer, the terminal device needs to repeatedly perform blind selection. This solution causes large signaling overhead and large latency, and affects service experience of a user.

### SUMMARY

This application provides a communication method, to reduce signaling overhead and latency, thereby ensuring service experience of a user.

According to a first aspect, a communication method is provided. The method may be performed by a unified data management function network element, or may be performed by a component (for example, a chip or a circuit) of the unified data management function network element. This is not limited.

The method includes: The unified data management function network element receives a first request message from an access and mobility management function network element, where the first request message is for requesting to obtain subscription data of a terminal device, and the first request message carries an identifier of the terminal device; and the unified data management function network element sends a first response message to the mobility management function network element when the terminal device supports a dual steer capability, where the first response message carries the subscription data, the subscription data includes first information, and the first information indicates a network that supports the dual steer capability and that is provided for the terminal device.

Based on the foregoing technical solution, in this application, when the terminal device supports the dual steer capability, the unified data management function network element sends the subscription data including the first information, and the first information may indicate the network that supports the dual steer capability and that is provided for the terminal device, so that the terminal device can select, based on a service requirement of the terminal device, to access a network that supports the dual steer capability. Compared with an existing solution in which all networks that can be accessed are provided for the terminal device, the technical solution in this application helps reduce signaling overhead and ensure service latency, thereby improving service experience of a user.

With reference to the first aspect, in a possible implementation, the first information is a first list, the first list includes at least one network, and each network in the first list supports the dual steer capability.

For example, the first list is generated by the unified data management function network element, or the first list is generated by a steering of roaming application function network element.

With reference to the first aspect, in a possible implementation, the first information is second indication information, the second indication information indicates whether each network included in a second list supports the dual steer capability, and the second list includes all networks that the terminal device is allowed to access. In another possible implementation, the first information may include the second list and the second indication information.

For example, the second indication information is generated by the unified data management function network element based on configured capability information corresponding to each network; or the second indication information is generated based on a first list and the stored second list, the first list includes at least one network, each network in the first list supports the dual steer capability, and the second list includes all the networks that the terminal device is allowed to access.

With reference to the first aspect, in a possible implementation, the first information is a third list, the third list includes a mapping relationship between all networks that the terminal device is allowed to access and capability information corresponding to the networks, and the capability information indicates whether each of all the networks that the terminal device is allowed to access supports the dual steer capability.

For example, the third list is generated by the unified data management function network element based on configured capability information corresponding to each network; or the third list is generated based on a first list and a stored second list, the first list includes at least one network, each network in the first list supports the dual steer capability, and the second list includes all the networks that the terminal device is allowed to access.

Based on the foregoing technical solution, in this application, the first information may be implemented in a plurality of manners, so that the network that supports the dual steer capability and that is provided for the terminal device can be indicated more flexibly.

With reference to the first aspect, in a possible implementation, the method further includes: The unified data management function network element obtains the first information based on the first request message.

In this application, there are the following two solutions for specific implementation of obtaining the first information by the unified data management function network element. The following separately describes the two solutions.

With reference to the first aspect, in a possible implementation, the capability information corresponding to each network is configured on the unified data management function network element, and the capability information corresponding to each network indicates whether the network supports the dual steer capability. In this case, the unified data management function network element obtains the first information based on the first request message and the configured capability information corresponding to each network.

With reference to the first aspect, in a possible implementation, the capability information corresponding to each network is configured on the steering of roaming application function network element, and the capability information corresponding to each network indicates whether the network supports the dual steer capability. In this case, the unified data management function network element sends a second request message to the steering of roaming application function network element based on the first request message, where the second request message carries the identifier of the terminal device and first indication information, and the first indication information indicates that the second request message is for requesting to obtain the network that supports the dual steer capability and that is provided for the terminal device. The unified data management function network element receives a second response message from the steering of roaming application function network element, where the second response message carries the first list. The unified data management function network element obtains the first information based on the first list.

For example, the unified data management function network element may obtain context information of the terminal device based on the identifier of the terminal device, where the context information of the terminal device includes an identifier of a first network currently accessed by the terminal device; and the unified data management function network element determines, based on the configured capability information corresponding to each network and the identifier of the first network, that the first network does not support the dual steer capability.

In this application, in another possible implementation, when the terminal device supports the dual steer capability and the first network does not support the dual steer capability, the unified data management function network element sends the first response message to the mobility management function network element, where the first network is a network that currently provides a service for the terminal device. In this application, it is assumed that an HPLMN is a network that supports the dual steer capability. Therefore, it may alternatively be understood as that the first network that currently provides the service for the terminal device does not belong to the HPLMN.

According to a second aspect, a communication method is provided. The method may be performed by an access and mobility management function network element, or may be performed by a component (for example, a chip or a circuit) of the access and mobility management function network element. This is not limited.

The method includes: The access and mobility management function network element receives a registration request message from a terminal device, where the registration accept message carries an identifier of the terminal device, and the terminal device supports a dual steer capability; the access and mobility management function network element sends a first request message to a unified data management function network element based on the registration request message, where the first request message is for requesting to obtain subscription data of the terminal device, and the first request message carries the identifier of the terminal device; the mobility management function network element receives a first response message from the unified data management function network element, where the first response message carries the subscription data, the subscription data includes first information, and the first information indicates a network that supports the dual steer capability and that is provided for the terminal device; and the mobility management function network element sends a registration response message to the terminal device, where the registration response message carries the subscription data.

Based on the foregoing technical solution, in this application, when the terminal device supports the dual steer capability, the mobility management function network element receives the subscription data including the first information, the first information may indicate the network that supports the dual steer capability and that is provided for the terminal device, and the mobility management function network element may send the first information to the terminal device, so that the terminal device can select, based on a service requirement of the terminal device, to access a network that supports the dual steer capability. Compared with an existing solution in which all networks that can be accessed are provided for the terminal device, the technical solution in this application helps reduce signaling overhead and ensure service latency, thereby improving service experience of a user.

With reference to the second aspect, in a possible implementation, the first information is a first list, the first list includes at least one network, and each network in the first list supports the dual steer capability.

With reference to the second aspect, in a possible implementation, the first information is second indication information, the second indication information indicates whether each network included in a second list supports the dual steer capability, and the second list includes all networks that the terminal device is allowed to access. In another possible implementation, the first information may include the second list and the second indication information.

With reference to the second aspect, in a possible implementation, the first information is a third list, the third list includes a mapping relationship between all networks that the terminal device is allowed to access and capability information corresponding to the networks, and the capability information indicates whether each of all the networks that the terminal device is allowed to access supports the dual steer capability.

According to a third aspect, a communication method is provided. The method may be performed by a terminal device, or may be performed by a component (for example, a chip or a circuit) of the terminal device. This is not limited.

The method may be applied to a terminal side, for example, a terminal or a communication module in the terminal, or a circuit or a chip (for example, a modem (modem) chip, also referred to as a baseband (baseband) chip, or a system on chip (system on chip, SoC) chip or a system in package (system in package, SIP) chip including a modem core) that implements a communication function in the terminal. The following uses an example in which the method is applied to a terminal device for description.

The method includes: The terminal device sends a registration request message to an access and mobility management function network element, where the registration accept message carries an identifier of the terminal device, and the terminal device supports a dual steer capability; and the terminal device receives a registration response message from the mobility management function network element, where the registration response message carries subscription data, the subscription data includes first information, and the first information indicates a network that supports the dual steer capability and that is provided for the terminal device.

Based on the foregoing technical solution, in this application, when the terminal device supports the dual steer capability, the mobility management function network element receives the subscription data including the first information, the first information may indicate the network that supports the dual steer capability and that is provided for the terminal device, and the mobility management function network element may send the first information to the terminal device, so that the terminal device can select, based on a service requirement of the terminal device, to access a network that supports the dual steer capability. Compared with an existing solution in which all networks that can be accessed are provided for the terminal device, the technical solution in this application helps reduce signaling overhead and ensure service latency, thereby improving service experience of a user.

With reference to the third aspect, in a possible implementation, the first information is a first list, the first list includes at least one network, and each network in the first list supports the dual steer capability.

With reference to the third aspect, in a possible implementation, the first information is second indication information, the second indication information indicates whether each network included in a second list supports the dual steer capability, and the second list includes all networks that the terminal device is allowed to access. In another possible implementation, the first information may include the second list and the second indication information.

With reference to the third aspect, in a possible implementation, the first information is a third list, the third list includes a mapping relationship between all networks that the terminal device is allowed to access and capability information corresponding to the networks, and the capability information indicates whether each of all the networks that the terminal device is allowed to access supports the dual steer capability.

According to a fourth aspect, a communication method is provided. The method may be performed by a steering of roaming application function network element, or may be performed by a component (for example, a chip or a circuit) of the steering of roaming application function network element. This is not limited.

The method includes: The steering of roaming application function network element receives a second request message from a unified data management function network element, where the second request message carries an identifier of a terminal device and first indication information, the first indication information indicates that the second request message is for requesting to obtain a network that supports a dual steer capability and that is provided for the terminal device, capability information corresponding to each network is configured on the steering of roaming application function network element, and the capability information corresponding to each network indicates whether the network supports the dual steer capability; the steering of roaming application function network element determines a first list based on the second request message and the configured capability information corresponding to each network; and the steering of roaming application function network element sends a second response message to the unified data management function network element, where the second response message carries the first list, the first list includes at least one network, and each network in the first list supports the dual steer capability.

Based on the foregoing technical solution, in this application, the unified data management function network element may send the second request message to the steering of roaming application function network element, and the message carries the first indication information. The first indication information indicates to request to obtain the network that supports the dual steer capability and that is provided for the terminal device. The steering of roaming application function network element may determine the first list based on the first indication information and the configured capability information corresponding to each network, and send the first list to the unified data management function network element, so that the unified data management function network element can obtain first information based on the first list.

According to a fifth aspect, a communication method is provided. The method may be performed by a unified data management function network element, or may be performed by a component (for example, a chip or a circuit) of the unified data management function network element. This is not limited.

The method includes: The unified data management function network element receives a fifth request message from a first mobility management function network element, where the fifth request message carries an identifier of a second terminal device, and the fifth request message is for requesting to provide, for the second terminal device, a network that supports a dual steer capability; the unified data management function network element obtains second information based on the fifth request message, where the second information indicates the network that supports the dual steer capability and that is provided for the second terminal device; the unified data management function network element determines, based on the identifier of the second terminal device carried in the fifth request message, that a mobility management function network element that provides a network service for the second terminal device is a second mobility management function network element; and the unified data management function network element sends a fourth response message to the second mobility management function network element, where the fourth response message carries the second information.

In this application, both a first terminal device and the second terminal device support the dual steer capability, subscription data of the first terminal device is associated with subscription data of the second terminal device, the subscription data of the first terminal device and the subscription data of the second terminal device belong to a same public land mobile network PLMN, and the first mobility management function network element is a network element that provides a dual steer service for the first terminal device. Details are not described below again.

Based on the foregoing technical solution, in this application, the unified data management function network element may obtain the second information based on the fifth request message from the first mobility management function network element, and send the second information to the second mobility management function network element, so that the second terminal device can select, based on a service requirement of the second terminal device, to access a network that supports the dual steer capability. This reduces signaling overhead, and ensures service latency, thereby improving service experience of a user.

With reference to the fifth aspect, in a possible implementation, the second information is a fourth list, the fourth list includes at least one network, and each network in the third list supports the dual steer capability.

For example, the fourth list is generated by the unified data management function network element, or the fourth list is generated by a steering of roaming application function network element.

With reference to the fifth aspect, in a possible implementation, the second information is fourth indication information, the fourth indication information indicates whether each network included in a fifth list supports the dual steer capability, and the fifth list includes all networks that the terminal device is allowed to access. In another possible implementation, the second information may include the fifth list and the fourth indication information.

For example, the fourth indication information is generated by the unified data management function network element based on configured capability information corresponding to each network; or the fourth indication information is generated based on a fourth list and the stored fifth list, the fourth list includes at least one network, each network in the fourth list supports the dual steer capability, and the fifth list includes all networks that the terminal device is allowed to access.

With reference to the fifth aspect, in a possible implementation, the second information is a sixth list, the sixth list includes a mapping relationship between all networks that the terminal device is allowed to access and capability information corresponding to the networks, and the capability information indicates whether each of all the networks that the terminal device is allowed to access supports the dual steer capability.

For example, the sixth list is generated by the unified data management function network element based on configured capability information corresponding to each network; or the sixth list is generated based on a fourth list and a stored fifth list, the fourth list includes at least one network, each network in the fourth list supports the dual steer capability, and the fifth list includes all networks that the terminal device is allowed to access.

With reference to the fifth aspect, in a possible implementation, the capability information corresponding to each network is configured on the unified data management function network element, and the capability information corresponding to each network indicates whether the network supports the dual steer capability. The unified data management function network element obtaining the second information based on the fifth request message includes: The unified data management function network element obtains the first information based on the fifth request message and the configured capability information corresponding to each network.

With reference to the fifth aspect, in a possible implementation, the capability information corresponding to each network is configured on the steering of roaming application function network element, and the capability information corresponding to each network indicates whether the network supports the dual steer capability. The unified data management function network element obtaining the second information based on the fifth request message includes: The unified data management function network element sends a sixth request message to the steering of roaming application function network element based on the fifth request message, where the sixth request message carries the identifier of the second terminal device and third indication information, and the third indication information indicates that the sixth request message is for requesting to obtain the network that supports the dual steer capability and that is provided for the second terminal device; the unified data management function network element receives a fifth response message from the steering of roaming application function network element, where the fifth response message carries the fourth list, the fourth list includes the at least one network, each network in the fourth list supports the dual steer capability, and the fourth list is determined by the steering of roaming application function network element based on the sixth request message and the configured capability information corresponding to each network; and the unified data management function network element obtains the second information based on the fourth list.

According to a sixth aspect, a communication method is provided. The method may be performed by a first mobility management function network element, or may be performed by a component (for example, a chip or a circuit) of the first mobility management function network element. This is not limited.

The method includes: The first mobility management function network element receives a fourth request message from a first terminal device, where the fourth request message carries an identifier of a second terminal device, and the fourth request message is for requesting to provide, for the second terminal device, a network that supports a dual steer capability; and the first mobility management function network element sends a fifth request message to a unified data management function network element, where the fifth request message carries the identifier of the second terminal device, and the fifth request message is for requesting to provide, for the second terminal device, the network that supports the dual steer capability.

For example, in a possible implementation, the first mobility management function network element may receive a response message from the unified data management function network element, where the response message carries second information. For example, in a possible implementation, the first mobility management function network element may send the second information to the first terminal device.

Based on the foregoing technical solution, in this application, the first mobility management function network element may send the fifth request message to the unified data management function network element based on the fourth request message from the first terminal device, to trigger a network to provide, for the second terminal device, the network that supports dual steer.

According to a seventh aspect, a communication method is provided. The method may be performed by a second mobility management function network element, or may be performed by a component (for example, a chip or a circuit) of the second mobility management function network element. This is not limited.

The method includes: The second mobility management function network element receives a fourth response message from a unified data management function network element, where the fourth response message carries second information, and the second information indicates a network that supports a dual steer capability and that is provided for a second terminal device; and the second mobility management function network element sends a fifth response message to the second terminal device, where the fifth response message carries the second information.

Based on the foregoing technical solution, in this application, the second mobility management function network element may forward the received second information to the second terminal device, so that the second terminal device can obtain the second information.

With reference to the seventh aspect, in a possible implementation, the second information is a fourth list, the fourth list includes at least one network, and each network in the third list supports the dual steer capability.

For example, the fourth list is generated by the unified data management function network element, or the fourth list is generated by a steering of roaming application function network element.

With reference to the seventh aspect, in a possible implementation, the second information is fourth indication information, the fourth indication information indicates whether each network included in a fifth list supports the dual steer capability, and the fifth list includes all networks that the terminal device is allowed to access. In another possible implementation, the second information may include the fifth list and the fourth indication information.

For example, the fourth indication information is generated by the unified data management function network element based on configured capability information corresponding to each network; or the fourth indication information is generated based on a fourth list and the stored fifth list, the fourth list includes at least one network, each network in the fourth list supports the dual steer capability, and the fifth list includes all networks that the terminal device is allowed to access.

With reference to the seventh aspect, in a possible implementation, the second information is a sixth list, the sixth list includes a mapping relationship between all networks that the terminal device is allowed to access and capability information corresponding to the networks, and the capability information indicates whether each of all the networks that the terminal device is allowed to access supports the dual steer capability.

For example, the sixth list is generated by the unified data management function network element based on configured capability information corresponding to each network; or the sixth list is generated based on a fourth list and a stored fifth list, the fourth list includes at least one network, each network in the fourth list supports the dual steer capability, and the fifth list includes all networks that the terminal device is allowed to access.

According to an eighth aspect, a communication method is provided. The method may be performed by a second terminal device, or may be performed by a component (for example, a chip or a circuit) of the second terminal device. This is not limited herein.

The method may be applied to a terminal side, for example, a terminal or a communication module in the terminal, or a circuit or a chip (for example, a modem (modem) chip, also referred to as a baseband (baseband) chip, or a system on chip (system on chip, SoC) chip or a system in package (system in package, SIP) chip including a modem core) that implements a communication function in the terminal. The following uses an example in which the method is applied to a terminal device for description.

The method includes: When the second terminal device determines that a currently accessed second network does not support a dual steer capability, the second terminal device obtains second information via a first terminal device, where the second information indicates a network that supports the dual steer capability and that is provided for the second terminal device; and the second terminal device selects, based on the second information, to access the network that supports the dual steer capability.

With reference to the eighth aspect, in a possible implementation, the second terminal device obtaining the second information via the first terminal device includes: The second terminal device sends a third request message to the first terminal device, where the third request message is for requesting to provide, for the second terminal device, the network that supports the dual steer capability; and the second terminal device receives a third response message from the first terminal device, where the third response message carries the second information.

With reference to the eighth aspect, in a possible implementation, the second information is a fourth list, the fourth list includes at least one network, and each network in the third list supports the dual steer capability.

For example, the fourth list is generated by the unified data management function network element, or the fourth list is generated by a steering of roaming application function network element.

With reference to the eighth aspect, in a possible implementation, the second information is fourth indication information, the fourth indication information indicates whether each network included in a fifth list supports the dual steer capability, and the fifth list includes all networks that the terminal device is allowed to access. In another possible implementation, the second information may include the fifth list and the fourth indication information.

For example, the fourth indication information is generated by the unified data management function network element based on configured capability information corresponding to each network; or the fourth indication information is generated based on a fourth list and the stored fifth list, the fourth list includes at least one network, each network in the fourth list supports the dual steer capability, and the fifth list includes all networks that the terminal device is allowed to access.

With reference to the eighth aspect, in a possible implementation, the second information is a sixth list, the sixth list includes a mapping relationship between all networks that the terminal device is allowed to access and capability information corresponding to the networks, and the capability information indicates whether each of all the networks that the terminal device is allowed to access supports the dual steer capability.

For example, the sixth list is generated by the unified data management function network element based on configured capability information corresponding to each network; or the sixth list is generated based on a fourth list and a stored fifth list, the fourth list includes at least one network, each network in the fourth list supports the dual steer capability, and the fifth list includes all networks that the terminal device is allowed to access.

According to a ninth aspect, a communication method is provided. The method may be performed by a first terminal device, or may be performed by a component (for example, a chip or a circuit) of the first terminal device. This is not limited herein.

The method may be applied to a terminal side, for example, a terminal or a communication module in the terminal, or a circuit or a chip (for example, a modem (modem) chip, also referred to as a baseband (baseband) chip, or a system on chip (system on chip, SoC) chip or a system in package (system in package, SIP) chip including a modem core) that implements a communication function in the terminal. The following uses an example in which the method is applied to a terminal device for description.

The method includes: The first terminal device receives a third request message from a second terminal device, where the third request message is for requesting to provide, for the second terminal device, a network that supports a dual steer capability; and the first terminal device sends a fourth request message to a first mobility management function network element, where the fourth request message carries an identifier of the second terminal device, and the fourth request message is for requesting to provide, for the second terminal device, the network that supports the dual steer capability.

In this application, after the second terminal device in a dual steer device determines that a current network does not support the dual steer capability, the second terminal device may send a request message to the first terminal device, to request to provide, for the second terminal device, the network that supports the dual steer capability. The second terminal device may trigger the network to update a network list to the second terminal device, so that the second terminal device can obtain second information. The second information may indicate the network that supports the dual steer capability and that is provided for the second terminal device. The second information is sent to the second terminal device via a core network element, so that the second terminal device can select, based on a service requirement of the second terminal device, to access a network that supports the dual steer capability. This reduces signaling overhead, and ensures service latency, thereby improving service experience of a user.

According to a tenth aspect, a communication method is provided. The method may be performed by a steering of roaming application function network element, or may be performed by a component (for example, a chip or a circuit) of the steering of roaming application function network element. This is not limited.

The method includes: The steering of roaming application function network element receives a sixth request message from a unified data management function network element, where the sixth request message carries an identifier of a terminal device and third indication information, the third indication information indicates that the sixth request message is for requesting to obtain a network that supports a dual steer capability and that is provided for the terminal device, capability information corresponding to each network is configured on the steering of roaming application function network element, and the capability information corresponding to each network indicates whether the network supports the dual steer capability; the steering of roaming application function network element determines a fourth list based on the sixth request message and the configured capability information corresponding to each network; and the steering of roaming application function network element sends a fifth response message to the unified data management function network element, where the fifth response message carries the fourth list, the fourth list includes at least one network, and each network in the fourth list supports the dual steer capability.

In a possible implementation, the fourth list does not include a PLMN network currently accessed by a first network device, so that the first terminal device and the second terminal device can be prevented from accessing a same network device, to ensure service experience of a user.

According to an eleventh aspect, a communication apparatus is provided. The apparatus is configured to perform the method in any one of the possible implementations of the first aspect to the tenth aspect. Specifically, the apparatus may include a unit and/or a module, for example, a transceiver unit and/or a processing unit, configured to perform the method in any one of the possible implementations of the first aspect to the tenth aspect.

In an implementation, the apparatus is a communication device (for example, an access and mobility management function network element, a terminal device, or a network slice admission control function network element). When the apparatus is a communication device, a communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a communication device (for example, an access and mobility management function network element, a terminal device, or a network slice admission control function network element). When the apparatus is a chip, a chip system, or a circuit used in a communication device, a communication unit may be an input/output interface, an interface circuit, an output circuit, an input circuit, a pin, a related circuit, or the like of the chip, the chip system, or the circuit; and the processing unit may be at least one processor, a processing circuit, a logic circuit, or the like.

According to a twelfth aspect, a communication apparatus is provided. The apparatus includes at least one processor, configured to execute a computer program or instructions stored in a memory, to perform the method in any one of the possible implementations of the first aspect and the fifth aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a unified data management function network element.

In another implementation, the apparatus is a chip, a chip system, or a circuit used in a unified data management function network element.

According to a thirteenth aspect, a communication apparatus is provided. The apparatus includes at least one processor, configured to execute a computer program or instructions stored in a memory, to perform the method in any one of the possible implementations of the second aspect, the sixth aspect, and the seventh aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is an access and mobility management function network element, a first access and mobility management function network element, or a second access and mobility management function network element.

In another implementation, the apparatus is a chip, a chip system, or a circuit used in an access and mobility management function network element, a first access and mobility management function network element, or a second access and mobility management function network element.

According to a fourteenth aspect, a communication apparatus is provided. The apparatus includes at least one processor, configured to execute a computer program or instructions stored in a memory, to perform the method in any one of the possible implementations of the third aspect, the eighth aspect, and the ninth aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a terminal device, a first terminal device, or a second terminal device.

In another implementation, the apparatus is a chip, a chip system, or a circuit used in a terminal device, a first terminal device, or a second terminal device.

According to a fifteenth aspect, a communication apparatus is provided. The apparatus includes at least one processor, configured to execute a computer program or instructions stored in a memory, to perform the method in any one of the possible implementations of the fourth aspect and the tenth aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a steering of roaming application function network element.

In another implementation, the apparatus is a chip, a chip system, or a circuit used in a steering of roaming application function network element.

According to a sixteenth aspect, this application provides a processor, including an input circuit, an output circuit, and a processing circuit. The processing circuit is configured to: receive a signal through the input circuit, and transmit a signal through the output circuit, to cause the processor to perform the method in any one of the possible implementations of any one of the first aspect to the tenth aspect.

During specific implementation, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a transceiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

Operations such as sending and obtaining/receiving related to the processor may be understood as operations such as outputting, receiving, and inputting of the processor or sending and receiving operations performed by a radio frequency circuit and an antenna, unless otherwise specified, or provided that the operations do not contradict actual functions or internal logic of the operations in related descriptions. This is not limited in this application.

According to a seventeenth aspect, a processing device is provided and includes a processor and a memory. The processor is configured to read instructions stored in the memory, and can receive a signal through a transceiver, and transmit a signal through a transmitter, to perform the method in any one of the possible implementations of any one of the first aspect to the tenth aspect.

Optionally, there are one or more processors, and there are one or more memories.

Optionally, the memory may be integrated with the processor, or the memory and the processor are separately disposed.

During specific implementation, the memory may be a non-transitory (non-transitory) memory, for example, a read-only memory (read-only memory, ROM). The memory and the processor may be integrated into a same chip, or may be separately disposed in different chips. A type of the memory and a manner of disposing the memory and the processor are not limited in embodiments of this application.

It should be understood that, a related data exchange process such as sending of indication information may be a process of outputting the indication information from the processor, and receiving of capability information may be a process of receiving the input capability information by the processor. Specifically, data output by the processor may be output to the transmitter, and input data received by the processor may be from the transceiver. The transmitter and the transceiver may be collectively referred to as a transceiver.

The processing device in the seventeenth aspect may be one or more chips. The processor in the processing device may be implemented by hardware, or may be implemented by software. When the processor is implemented by hardware, the processor may be a logic circuit, an integrated circuit, or the like. When the processor is implemented by software, the processor may be a general-purpose processor, and is implemented by reading software code stored in the memory. The memory may be integrated into the processor, or may be located outside the processor and exist independently.

According to an eighteenth aspect, a computer-readable storage medium is provided. The computer-readable medium stores program code executed by a device, and the program code includes the method in any one of the possible implementations of the first aspect to the tenth aspect.

According to a nineteenth aspect, a computer program product including instructions is provided. When the computer program product runs on a computer, the computer is caused to perform the method in any one of the possible implementations of the first aspect to the tenth aspect.

According to a twentieth aspect, a communication system is provided. The communication system includes: a unified data management function network element, a mobility management function network element, a terminal device, and an access and mobility management function network element. The unified data management function network element is configured to perform the method in any one of the possible implementations of the first aspect, the mobility management function network element is configured to perform the method in any one of the possible implementations of the second aspect, and the terminal device is configured to perform the method in any one of the possible implementations of the third aspect.

Optionally, the communication system further includes a steering of roaming application function network element, and the steering of roaming application function network element is configured to perform the method in any one of the possible implementations of the fourth aspect.

According to a twenty-first aspect, a communication system is provided. The communication system includes a unified data management function network element, a first mobility management function network element, a second mobility management function network element, a first terminal device, and a second terminal device. The unified data management function network element is configured to perform the method in any one of the possible implementations of the fifth aspect, the first mobility management function network element is configured to perform the method in any one of the possible implementations of the sixth aspect, the second mobility management function network element is configured to perform the method in any one of the possible implementations of the seventh aspect, the first terminal device is configured to perform the method in any one of the possible implementations of the eighth aspect, and the second terminal device is configured to perform the method in any one of the possible implementations of the ninth aspect.

Optionally, the communication system further includes a steering of roaming application function network element, and the steering of roaming application function network element is configured to perform the method in any one of the possible implementations of the tenth aspect.

### BRIEF DESCRIPTION OF DRAWINGS

FIG. 1 is a diagram of a system architecture to which this application is applicable;
FIG. 2 is a diagram of a dual steer device according to this application;
FIG. 3 is a schematic flowchart of a communication method 300 according to this application;
FIG. 4 is a schematic flowchart of a communication method 400 according to this application;
FIG. 5 is a schematic flowchart of a communication method 500 according to this application;
FIG. 6 is a schematic flowchart of a communication method 600 according to this application;
FIG. 7 is a schematic flowchart of a communication method 700 according to this application;
FIG. 8 is a block diagram of a communication apparatus 100 according to this application; and
FIG. 9 is a block diagram of a communication apparatus 200 according to this application.

### DESCRIPTION OF EMBODIMENTS

The following describes technical solutions in this application with reference to accompanying drawings.

The technical solutions provided in this application may be applied to various communication systems, for example, a universal mobile telecommunications system (universal mobile telecommunications system, UMTS), a wireless local area network (wireless local area network, WLAN), a wireless fidelity (wireless fidelity, Wi-Fi) system, a 4th generation (4th generation, 4G) mobile communication system like a long term evolution (long term evolution, LTE) system, a 5th generation (5th generation, 5G) mobile communication system like a new radio (new radio, NR) system, and a future evolved communication system like a 6th generation (6th generation, 6G) mobile communication system.

All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be used.

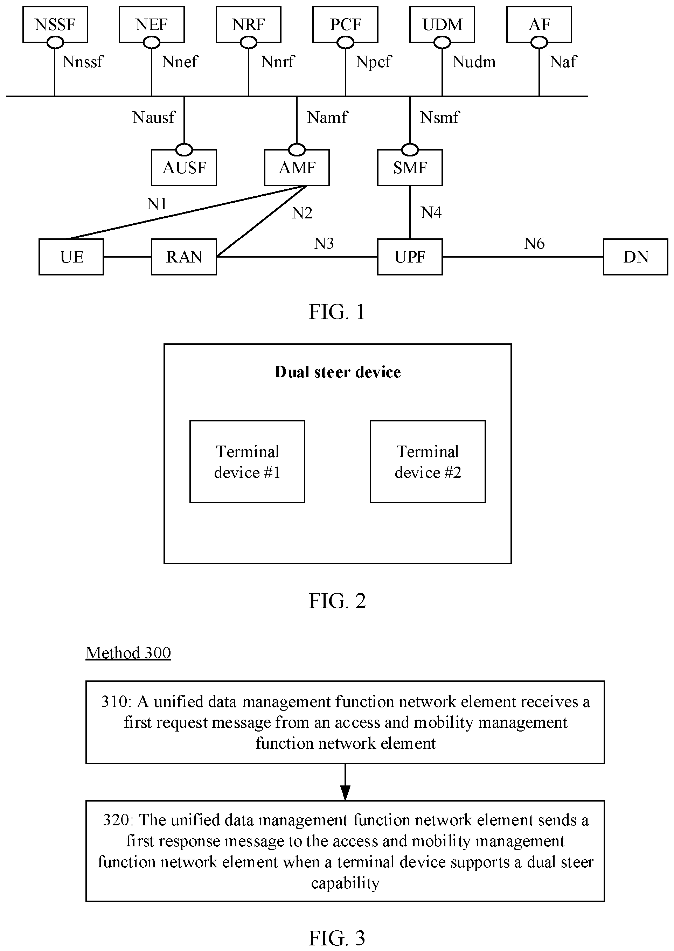

FIG. 1 is a diagram of a system architecture to which this application is applicable. FIG. 1 is a diagram of a non-roaming 5G system architecture (based on a reference point). For ease of understanding embodiments of this application, a system architecture applicable to embodiments of this application is first described in detail with reference to FIG. 1. The system architecture may specifically include the following network elements:
1. A user equipment (user equipment, UE) may also be referred to as a terminal device, an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides a voice/data for a user, for example, a handheld device or a vehicle-mounted device having a wireless connection function. Currently, a terminal may be, for example, a mobile phone (mobile phone), a tablet computer, a notebook computer, a palmtop computer, a mobile internet device (mobile internet device, MID), a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal (for example, a game console, s smart television, a smart speaker, a smart refrigerator, and fitness equipment) in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device, another processing device connected to a wireless modem, a transportation vehicle having a wireless communication function, a communication module, a roadside unit (roadside unit, RSU) having a terminal function, a terminal device in a 5G network, or a terminal device in a future evolved public land mobile communication network (public land mobile network, PLMN). This is not limited in embodiments of this application.

By way of example, but not limitation, in embodiments of this application, the terminal device may alternatively be a wearable device. The wearable device may also be referred to as a wearable intelligent device, and is a general term for wearable devices such as glasses, gloves, watches, clothes, and shoes that are intelligently designed and developed for daily wear by using wearable technologies. The wearable device is a portable device that can be directly worn on the body or integrated into clothes or an accessory of a user. The wearable device is not merely a hardware device, but implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In addition, in embodiments of this application, the terminal device may alternatively be a terminal device in an IoT system. An IoT is an important part of future information technology development. A main technical feature of the IoT is to connect a thing to a network by using a communication technology, to implement an intelligent network for human-machine interconnection and thing-thing interconnection.

It should be noted that the terminal device and an access network device may communicate with each other by using an air interface technology (for example, an NR technology or an LTE technology). Terminal devices may also communicate with each other by using an air interface technology (for example, an NR technology or an LTE technology).

In embodiments of this application, an apparatus configured to implement a function of the terminal device may be the terminal device, or may be an apparatus that can support the terminal device in implementing the function, for example, a chip system or a chip. The apparatus may be mounted in the terminal device. In embodiments of this application, the chip system may include a chip, or may include a chip and another discrete component.

2. A (radio) access network (radio access network, (R)AN) is configured to provide a network access function for an authorized user in a specific area, and can use transmission tunnels with different quality based on user tiers, service requirements, or the like. A (R)AN network element can manage radio resources and provide an access service for the terminal device, to complete forwarding of control signals and user data between the terminal device and the core network. The (R)AN may also be understood as a base station in a conventional network. A network device in this application may alternatively be a radio controller in a cloud radio access network (cloud radio access network, CRAN) scenario. The network device may alternatively be a base station device in a future 5G network or a network device in a future evolved PLMN network. The network device may alternatively be a wearable device or a vehicle-mounted device.

The network device may alternatively be a transmission and reception point (transmission and reception point, TRP), where the TRP is a device or module having a corresponding communication function. A communication module, a circuit, or a chip that performs the corresponding communication function is usually disposed in the TRP. Program instructions for performing the corresponding communication function and corresponding program instructions may also be configured in the TRP.

For example, the TRP in embodiments of this application may be a RAN device or a network element deployed in a radio access network (radio access network, RAN). For example, the TRP may be a RAN device or an apparatus that can support a RAN device implementing the function, for example, a chip system or a combined component or component that can implement a function of an access network device, and the apparatus may be mounted in the RAN device. For another example, the TRP may be an access point (access point, AP) in a Wi-Fi system, for example, a home gateway, a router, a server, a switch, a bridge, a base station, a base station controller (base station controller, BSC), a base transceiver station (base transceiver station, BTS), a home base station, a baseband unit (baseband unit, BBU), a wireless relay node, or a wireless backhaul node; or may be an evolved NodeB (evolved NodeB, eNB) in a 4G system, a next-generation eNB (ng-eNB) during transition from a 4G system to a 5G system, a next-generation NodeB (next-generation NodeB, gNB) in a 5G system, or a RAN node that implements (partial) functions of a gNB. The RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). Alternatively, the TRP may be a satellite, or a base station in various forms in the future. In addition, the TRP may be a macro base station, or may be a micro base station or an indoor base station, or may be a relay node, a donor node, or the like.

3. An access and mobility management function (access and mobility management function, AMF) is mainly used for mobility management, access management, and the like. Specifically, the AMF may be configured to implement a function other than session management in functions of a mobility management entity (mobility management entity, MME), for example, functions such as lawful interception or access authorization (or authentication).

For example, the RAN device may use different radio access technologies. Currently, there are two types of radio access technologies: a 3GPP access technology (for example, a radio access technology used in a 3rd generation (3rd generation, 3G) system, a 4th generation (4th generation, 4G) system, or a 5G system) and a non-3GPP (non-3GPP) access technology. The 3GPP access technology refers to an access technology that complies with a 3GPP standard specification. For example, an access network device in the 5G system is referred to as a next generation node base station (next generation Node Base station, gNB) or a RAN device. The non-3GPP access technology may include an air interface technology represented by an access point (access point, AP) in wireless fidelity (wireless fidelity, Wi-Fi), a worldwide interoperability for microwave access (worldwide interoperability for microwave access, WiMAX), or a code division multiple access (code division multiple access, CDMA). The AN device may allow interconnection and interworking between the terminal device and a 3GPP core network by using the non-3GPP technology.

The RAN device can implement functions such as radio resource management, quality of service (quality of service, QoS) management, and data compression and encryption on an air interface side. The AN device provides an access service for the terminal device, to complete forwarding of control signals and user data between the terminal device and the core network.

For example, the RAN device may include but is not limited to: a macro base station, a micro base station (also referred to as a small cell), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an AP in a Wi-Fi system, a wireless relay node, a wireless backhaul node, a transmission point (transmission point, TP), a transmission and reception point (transmission and reception point, TRP), or the like; or may be a gNB or a transmission point (a TRP or a TP) in the 5G (for example, NR) system, or one antenna panel or a group of antenna panels (including a plurality of antenna panels) of a base station in the 5G system; or may be a network node that forms a gNB or a transmission point, for example, a distributed unit (distributed unit, DU) or a base station in a next-generation 6G communication system. A specific technology and a specific device form that are used by the RAN device are not limited in embodiments of this application.

4. A session management function (Session Management Function, SMF) is mainly used for session management, internet protocol (Internet Protocol, IP) address assignment and management of a terminal device, manageable user plane function selection, a termination point of a policy control or charging function interface, a downlink data notification, or the like.

5. A user plane function (user plane function, UPF) is used for packet routing and forwarding, quality of service (quality of service, QoS) processing of user plane data, or the like. The UPF is specifically classified into an intermediate-UPF (intermediate-UPF, I-UPF) and an anchor-UPF (anchor-UPF, A-UPF). The I-UPF is connected to an access network RAN, the A-UPF is a UPF of a session anchor, and the A-UPF may also be referred to as a PDU session anchor (PDU session anchor, PSA).

6. A data network (data network, DN) is configured to provide a network for transmitting data, for example, the internet. In the architecture in embodiments of this application, the PSA accesses a remote DN, and an L-PSA may access a local DN.

7. An authentication server function (authentication server function, AUSF) is mainly used for user authentication, or the like.

8. A policy control function (policy control function, PCF) is a unified policy framework used for guiding network behavior, and provides policy rule information or the like for a control plane function network element (for example, an AMF network element or an SMF network element).

9. A unified data management (unified data management, UDM) is used for user identifier processing, access authentication, registration, mobility management, or the like.

10. An application function (application function, AF) mainly supports interaction with a 3rd generation partnership project (3rd generation partnership project, 3GPP) core network to provide a service, for example, affects a data routing decision or a policy control function, or provides some third-party services for a network side. The AF may be understood as a third-party server, for example, an application server on the internet, provides related service information, including providing quality of service requirement information corresponding to a service to the PCF, and sending user plane data information of the service to a PSA-UPF. The AF may be a content provider (content provider, CP).

A steering of roaming application function (steering of roaming application function, SOR AF) network element in this application may be understood as a device specially configured to provide related information for a terminal device to select a network. For example, after an operator deploys the device, the UDM may interact with the device, and obtain network selection information of a specific terminal device from the device. The network selection information includes a list of networks that can be accessed by the terminal device and a recommended access type.

11. A network slice selection function (network slice selection function, NSSF) is used for network slice selection.

12. A network exposure function (network exposure function, NEF) network element exposes a capability of each NF and converts internal and external information. For example, the NEF may be used in an edge computing scenario.

13. A network repository function (network repository function, NRF) network element supports registration and discovery of network functions, and enables network functions (network functions, NFs) to discover each other and communicate with each other through an application programming interface (application programming interface, API).

In the system architecture, an N1 interface is a reference point between the terminal device and the AMF; an N2 interface is a reference point between the (R)AN and the AMF, and is configured to send a non-access stratum (non-access stratum, NAS) message or the like; an N3 interface is a reference point between the (R)AN and the I-UPF, and is configured to transmit user plane data or the like; an N4 interface is a reference point between the SMF and the PSA-UPF, and is configured to transmit information such as tunnel identification information of an N3 connection, data buffer indication information, and a downlink data notification message; and an N6 interface is a reference point between the UPF and the DN, and is configured to transmit user plane data or the like.

It should be understood that the system architecture applied to embodiments of this application in FIG. 1 is merely an example of a network architecture described from a perspective of a reference point architecture, and a network architecture applicable to embodiments of this application is not limited thereto. Any network architecture that can implement functions of the foregoing network elements is applicable to embodiments of this application.

It should be noted that, names of interfaces between the network elements in FIG. 1 are merely examples, and the interfaces may have other names during specific implementation. This is not specifically limited in embodiments of this application. In addition, this application does not exclude that, with evolution of technologies, various core network elements may be co-located with each other.

It should be noted that names of the network elements (such as the AMF, the UDM, and the AF) included in FIG. 1 are also merely examples, and do not constitute any limitation on functions of the network elements. In the 5G network and another future network, the foregoing network elements may alternatively have other names. This is not specifically limited in embodiments of this application. For example, in a 6G network, terms in 5G may be reused for a part or all of the foregoing network elements, or other names may be used, or the like. This is uniformly described herein. Details are not described below. In addition, it should be understood that, names of messages (or signaling) transmitted between the foregoing network elements are merely examples, and do not constitute any limitation on functions of the messages.

For ease of understanding the technical solutions in this application, the following first briefly describes some technical terms in this application.

### 1. Dual steer device (dual steer device)

The concept of dual steer device (dual steer device) is introduced in standard discussion of release 19 (release 19, R19). One dual steer device may include two pieces of subscription data, or include two independent terminal devices. In addition, a corresponding association relationship is stored in a network for the two pieces of subscription data, or for subscription data of each terminal device, and the two pieces of subscription data belong to a same operator. As shown in FIG. 2, for example, the two terminal devices included in the dual steer device are respectively a terminal device #1 and a terminal device #2. For example, subscription data of a UE #1 and subscription data of a UE #2 have an association relationship in a UDM. For another example, the terminal device #1 and the terminal device #2 share same subscription information. It should be understood that the terminal device #1 and the terminal device #2 in the following may alternatively refer to two pieces of subscription data in the same dual steer device.

A specific implementation form of the dual steer device is not limited in this application. For example, the dual steer device may be a terminal device that has two SIM cards and can implement dual-SIM dual-active (to be specific, two subscriber identity module (subscriber identity module, SIM) cards can simultaneously send and receive data, for example, one card is used to play a game and the other card is used to make a WeChat call). For another example, the dual steer device may alternatively be two completely independent UEs, and the two UEs are encapsulated in a same device or are connected in some other manners. Herein, it is assumed that the two UEs in the dual steer device can communicate with each other.

### 2. Public land mobile network (public land mobile network, PLMN)

The PLMN is also referred to as a "public call area in GSM", which is a mobile communication network including a base station and a core network, and may provide mobile phone, data, and other wireless communication services. The PLMN is a national mobile network including a group of radio channels, a base station, and a core network, with interfaces complying with GSM standards, and allows a user to seamlessly use a mobile phone, an SMS message, and other mobile services across different regions and countries. PLMN selection depends on an operator and available technologies in an area where the user is located. A terminal device scans available PLMNs and selects a PLMN with the strongest signal. For example, if the user manually selects a PLMN, the terminal device is connected to the PLMN even if signal quality of the PLMN is not as good as that of another available PLMN.

Network capabilities are also enhanced in the protocol. For example, some PLMN networks support a dual steer capability, and some PLMNs do not support the dual steer capability. In this application, it is assumed that a home public land mobile network (home public land mobile network, HPLMN) supports the dual steer capability. It should be understood that, after the dual steer capability is introduced into a network, the network is required to associate two terminal devices in a dual steer device, and deliver special policy information to the two terminal devices. Therefore, devices such as an AMF, an SMF, and a PCF in the network are required to be correspondingly upgraded. If all devices in the network are upgraded to devices supporting DualSteer, the network may provide a service related to dual steer for the terminal device, for example, steering (steering) or switching (switching). In this case, the network may be referred to as supporting the dual steer capability.

The concept of dual steer device (dual steer device) is introduced in standard discussion of release 19 (release 19, R19). In addition, network capabilities are enhanced in R19, that is, some networks are defined to support dual steer (dual steer). In existing mechanisms, a terminal device obtains subscription data through a registration procedure, and a network list included in the subscription data includes all networks that the terminal device is allowed to access. In this case, if the terminal device supports a dual steer capability, and subsequently needs to access a network that supports dual steer, blind selection needs to be continuously performed. This solution causes large signaling overhead and large latency, affecting service experience of a user.

In view of this, this application provides a communication method. When a terminal device supports a dual steer capability, subscription data obtained by the terminal device includes first information, and the first information may indicate to provide, for the terminal device, a network that supports the dual steer capability. It may alternatively be understood as that, in this application, in all networks that the terminal device is allowed to access, the terminal device may determine a capability corresponding to each network, and the terminal device may directly select, based on a service requirement of the terminal device, a network that supports access to dual steer. Compared with an existing solution in which all networks that can be accessed are provided for the terminal device, the technical solution in this application helps reduce signaling overhead and ensure service latency, thereby improving service experience of a user.

FIG. 3 is a schematic flowchart of a communication method 300 according to this application. As shown in FIG. 3, the method includes the following steps.

310: A unified data management function network element receives a first request message from an access and mobility management function network element.

In this application, the first request message is for requesting to obtain subscription data of a terminal device, and the first request message carries an identifier of the terminal device.

In a possible implementation, before step 310, the unified data management function network element stores the identifier of the terminal device and capability information of the terminal device through a context registration procedure. In this application, it is assumed that a capability of the terminal device indicates that the terminal device supports a dual steer capability.

320: The unified data management function network element sends a first response message to the mobility management function network element when the terminal device supports the dual steer capability.

In this application, the first response message carries the subscription data, the subscription data includes first information, and the first information indicates a network that supports the dual steer capability and that is provided for the terminal device.

In a possible implementation, the first information is a first list, the first list includes at least one network, and each network in the first list supports the dual steer capability. For example, the first list is generated by the unified data management function network element, or the first list is generated by a steering of roaming application function network element.

In another possible implementation, the first information is second indication information, the second indication information indicates whether each network included in a second list supports the dual steer capability, and the second list includes all networks that the terminal device is allowed to access. For another example, the first information may include the second list and the second indication information. For example, the second indication information is generated by the unified data management function network element based on configured capability information corresponding to each network; or the second indication information is generated based on a first list and the stored second list, the first list includes at least one network, each network in the first list supports the dual steer capability, and the second list includes all the networks that the terminal device is allowed to access.

In still another possible implementation, the first information is a third list, the third list includes a mapping relationship between all networks that the terminal device is allowed to access and capability information corresponding to the networks, and the capability information indicates whether each of all the networks that the terminal device is allowed to access supports the dual steer capability. For example, the third list is generated by the unified data management function network element based on configured capability information corresponding to each network; or the third list is generated based on a first list and a stored second list, the first list includes at least one network, each network in the first list supports the dual steer capability, and the second list includes all the networks that the terminal device is allowed to access.

In this application, in a possible implementation, before the unified data management function network element sends the first response message, the unified data management function network element may obtain the capability information of the terminal device based on the identifier of the terminal device carried in the first request message, and determine that the terminal device supports dual steer.

In a possible implementation, before step 320, the method further includes: The unified data management function network element obtains the first information based on the first request message.

For example, the capability information corresponding to each network is configured on the unified data management function network element, and the capability information corresponding to each network indicates whether the network supports the dual steer capability. In this case, the unified data management function network element obtains the first information based on the first request message and the configured capability information corresponding to each network.

For example, the capability information corresponding to each network is configured on the steering of roaming application function network element, and the capability information corresponding to each network indicates whether the network supports the dual steer capability. In this case, the unified data management function network element sends a second request message to the steering of roaming application function network element based on the first request message, where the second request message carries the identifier of the terminal device and first indication information, and the first indication information indicates that the second request message is for requesting to obtain the network that supports the dual steer capability and that is provided for the terminal device. The unified data management function network element receives a second response message from the steering of roaming application function network element, where the second response message carries the first list. The unified data management function network element obtains the first information based on the first list.

In this application, in another possible implementation, when the terminal device supports the dual steer capability and a first network does not support the dual steer capability, the unified data management function network element sends the first response message to the mobility management function network element, where the first network is a network that currently provides a service for the terminal device. As described above, in this application, it is assumed that an HPLMN is a network that supports the dual steer capability. Therefore, it may alternatively be understood as that the first network that currently provides the service for the terminal device does not belong to the HPLMN.

Based on the foregoing technical solution, in this application, when the terminal device supports the dual steer capability, the unified data management function network element sends the subscription data including the first information, and the first information may indicate the network that supports the dual steer capability and that is provided for the terminal device, so that the terminal device can select, based on a service requirement of the terminal device, to access a network that supports the dual steer capability. Compared with an existing solution in which all networks that can be accessed are provided for the terminal device, the technical solution in this application helps reduce signaling overhead and ensure service latency, thereby improving service experience of a user.

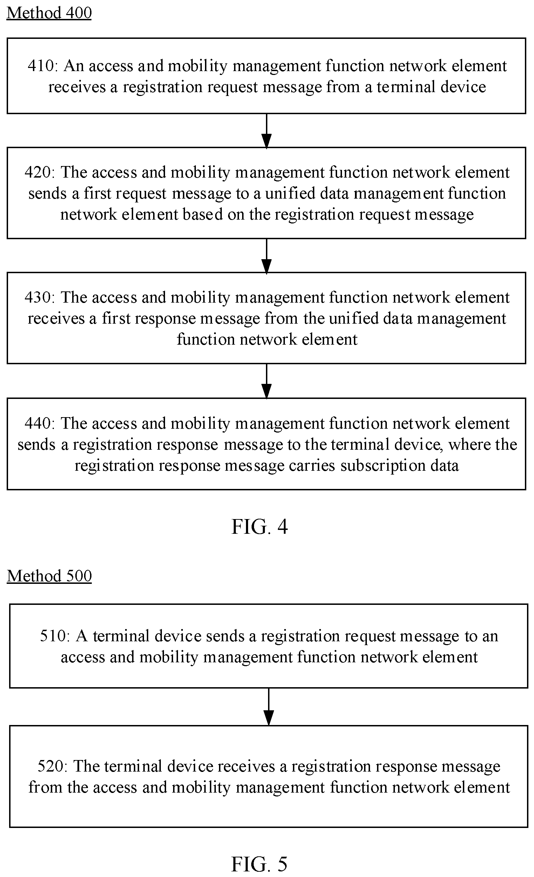

FIG. 4 is a schematic flowchart of a communication method 400 according to this application. As shown in FIG. 4, the method includes the following steps.

410: An access and mobility management function network element receives a registration request message from a terminal device.

In this application, the registration accept message carries an identifier of the terminal device, and the terminal device supports a dual steer capability.

For example, the registration request message further carries capability information, a registration type, or the like of the terminal device. A capability of the terminal device indicates that the terminal device supports the dual steer capability. For example, the registration type includes at least one of the following: initial registration (initial registration), mobility registration update (mobility registration update), periodic registration update (periodic registration update), or emergency registration (emergency registration).

In this application, the "identifier of the terminal device" may be understood as follows: If the terminal device has a valid 5G globally unique temporary UE identity (5G globally unique temporary identifier, 5G-GUTI), the 5G-GUTI is carried in the registration request. If the UE does not have a valid 5G-GUTI, a subscription concealed identifier (subscription concealed identifier, SUCI) is carried. In emergency registration, if the UE does not have a valid 5G-GUTI or a subscription permanent identifier (subscription permanent identifier, SUPI), a permanent equipment identifier (permanent equipment identifier, PEI) is carried.

420: The access and mobility management function network element sends a first request message to a unified data management function network element based on the registration request message.

In this application, the first request message is for requesting to obtain subscription data of the terminal device, and the first request message carries the identifier of the terminal device.

In a possible implementation, the access and mobility management function network element sends, to the unified data management function network element based on the registration request message, a request message for registering a context of the terminal device, where the request message carries the identifier of the terminal device, the capability of the terminal device, the registration type of the terminal device, an identifier of the access and mobility management function network element, or the like. After storing the context of the terminal device, the unified data management function network element may send a registration response message to the access and mobility management function network element.

For various implementations of the "first information" in the method 400, refer to the descriptions of step 320 in the foregoing method 300 for understanding. Details are not described again.

430: The access and mobility management function network element receives a first response message from the unified data management function network element.

In this application, the first response message carries the subscription data, the subscription data includes first information, and the first information indicates a network that supports the dual steer capability and that is provided for the terminal device.

440: The access and mobility management function network element sends the registration response message to the terminal device, where the registration response message carries the subscription data.

Based on the foregoing technical solution, in this application, when the terminal device supports the dual steer capability, the mobility management function network element receives the subscription data including the first information, the first information may indicate the network that supports the dual steer capability and that is provided for the terminal device, and the mobility management function network element may send the first information to the terminal device, so that the terminal device can select, based on a service requirement of the terminal device, to access a network that supports the dual steer capability. Compared with an existing solution in which all networks that can be accessed are provided for the terminal device, the technical solution in this application helps reduce signaling overhead and ensure service latency, thereby improving service experience of a user.

FIG. 5 is a schematic flowchart of a communication method 500 according to this application. As shown in FIG. 5, the method includes the following steps.

510: A terminal device sends a registration request message to an access and mobility management function network element.

In this application, the registration accept message carries an identifier of the terminal device, and the terminal device supports a dual steer capability.

For example, the registration request message further carries capability information, a registration type, or the like of the terminal device. For details, refer to the descriptions of step 410 in the foregoing method 400. Details are not described again.

520: The terminal device receives a registration response message from the mobility management function network element.

In this application, the registration response message carries subscription data, the subscription data includes first information, and the first information indicates a network that supports the dual steer capability and that is provided for the terminal device.

For various implementations of the "first information" in the method 500, refer to the descriptions of step 320 in the foregoing method 300 for understanding. Details are not described again.

Optionally, the method further includes step 530: The terminal device selects, based on the first information, to access the network that supports the dual steer capability.

In this application, the terminal device may select, based on the first information and a current service requirement of the terminal device, to access the network that supports the dual steer capability.

Based on the foregoing technical solution, in this application, when the terminal device supports the dual steer capability, the terminal device receives, from the mobility management function network element, the subscription data including the first information, and the first information may indicate the network that supports the dual steer capability and that is provided for the terminal device, so that the terminal device can select, based on a service requirement of the terminal device, to access the network that supports the dual steer capability. Compared with an existing solution in which all networks that can be accessed are provided for the terminal device, the technical solution in this application helps reduce signaling overhead and ensure service latency, thereby improving service experience of a user.

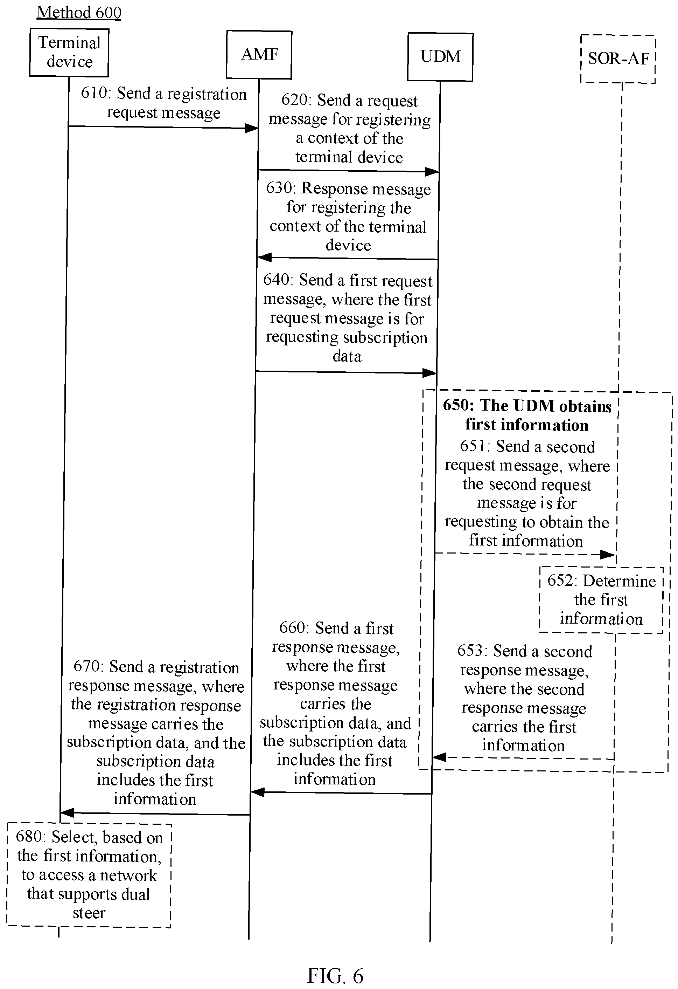

FIG. 6 is a schematic flowchart of a communication method 600 according to a specific embodiment of this application. As shown in FIG. 6, the method includes the following steps.

610: A terminal device sends a registration request message to an AMF.

Correspondingly, the AMF receives the registration request message from the terminal device.

In this application, the registration request message is for requesting to register with a network, the registration accept message carries an identifier of the terminal device, and the terminal device supports a dual steer capability.

For example, the registration request message further carries capability information, a registration type, or the like of the terminal device. A capability of the terminal device indicates that the terminal device supports the dual steer capability. For example, the registration type includes at least one of the following: initial registration (initial registration), mobility registration update (mobility registration update), periodic registration update (periodic registration update), or emergency registration (emergency registration).

In this application, the "identifier of the terminal device" may be understood as follows: If the terminal device has a valid 5G globally unique temporary UE identity (5G globally unique temporary identifier, 5G-GUTI), the 5G-GUTI is carried in the registration request. If the UE does not have a valid 5G-GUTI, a subscription concealed identifier (subscription concealed identifier, SUCI) is carried. In emergency registration, if the UE does not have a valid 5G-GUTI or a subscription permanent identifier (subscription permanent identifier, SUPI), a permanent equipment identifier (permanent equipment identifier, PEI) is carried.

For example, the registration request message may be a registration request.

620: The AMF sends, to a UDM based on the registration request message, a request message for registering a context of the terminal device.

Correspondingly, the UDM receives the request message for registering the context of the terminal device.

The request message carries the identifier of the terminal device, the capability of the terminal device, the registration type of the terminal device, an identifier of an access and mobility management function network element, or the like. The request message is for requesting the UDM to register the context of the terminal device.

For example, the request message for registering the context of the terminal device may be a Nudm_UECM_Registration request.

630: After storing the context of the terminal device, the UDM may send a context registration response message to the access and mobility management function network element.

For example, the context registration response message may be a Nudm_UECM_Registration response.

640: The AMF sends a first request message to the UDM.

In this application, the first request message is for requesting to obtain subscription data of the terminal device, and the first request message carries the identifier of the terminal device.

For example, the first request message may be a Nudm_SDM_Get request.

Optionally, the method further includes 650: The UDM obtains first information.

In this application, the first information indicates a network that supports the dual steer capability and that is provided for the terminal device.

In this application, for example, the UDM may obtain the subscription information of the terminal device based on the identifier of the terminal device carried in the first request message, and determine that the terminal device supports dual steer.

For example, in a possible implementation, when the UDM determines that the terminal device supports the dual steer capability, the UDM may be triggered to obtain the first information.

In another possible implementation, when the terminal device supports the dual steer capability and a first network does not support the dual steer capability, the UDM may also be triggered to obtain the first information. The first network is a network that currently provides a service for the terminal device. As described above, in this application, it is assumed that an HPLMN is a network that supports the dual steer capability. Therefore, it may alternatively be understood as that the first network that currently provides the service for the terminal device does not belong to the HPLMN.

For example, the first information is a first list, the first list includes at least one network, and each network in the first list supports the dual steer capability.

For example, the first information is second indication information, the second indication information indicates whether each network included in a second list supports the dual steer capability, and the second list includes all networks that the terminal device is allowed to access. For another example, the first information may include the second list and the second indication information.

For example, the first information is a third list, the third list includes a mapping relationship between all networks that the terminal device is allowed to access and capability information corresponding to the networks, and the capability information indicates whether each of all the networks that the terminal device is allowed to access supports the dual steer capability. Table 1 is a diagram of a third list shown in this application. As shown in Table 1, each PLMN corresponds to capability information indicating whether the PLMN supports dual steer. Optionally, an access technology corresponding to each PLMN may also be added to Table 1. For example, the access technology includes 3rd generation partnership project (3rd generation partnership project, 3GPP) access and non-3GPP access.

**Table 1**

| PLMN network | Whether dual steer is supported | Access technology |
|---|---|---|
| PLMN #1 | Yes | 3GPP |
| PLMN #2 | No | 3GPP |
| PLMN #3 | No | Non-3GPP |
| PLMN #4 | Yes | 3GPP |
| ... | ... | ... |

In this application, there are the following two solutions for specific implementation of obtaining the first information by the UDM. The following separately describes the two solutions.

### Solution 1

It is assumed that capability information corresponding to each network is configured on the UDM, and the capability information corresponding to each network indicates whether the network supports the dual steer capability. In this case, the UDM may obtain the first information based on the first request message and the configured capability information corresponding to each network.

For example, the UDM may generate the first information based on the configured capability information corresponding to each network.

For example, the UDM may generate the first list, or the UDM may generate the second indication information based on the second list and the configured capability information corresponding to each network, or the UDM may generate the third list based on the second list and the configured capability information corresponding to each network.

### Solution 2

It is assumed that capability information corresponding to each network is configured on an SOR-AF, and the capability information corresponding to each network indicates whether the network supports the dual steer capability. In this case, it is assumed that the UDM is triggered to obtain the first information. Optionally, the method further includes 651: The UDM sends a second request message to the SOR-AF based on the first request message, where the second request message carries the identifier of the terminal device and first indication information, and the first indication information indicates that the second request message is for requesting to obtain the network that supports the dual steer capability and that is provided for the terminal device. In this case, 652 is as follows: The SOR-AF determines the first list based on the received second request message and the configured capability information corresponding to each network; and 653 is as follows: The SOR sends a second response message to the UDM, where the second response message carries the first list, the first list includes at least one network, and each network in the first list supports the dual steer capability. In this case, the UDM may obtain the first information based on the first list.

For example, the UDM may generate the second indication information based on the received first list and the configured second list. The second list includes all networks that the terminal device is allowed to access, and the second indication information indicates whether each network included in the second list supports the dual steer capability.

For example, the UDM may generate the third list (for example, Table 1) based on the received first list and the configured second list. The third list includes the mapping relationship between all the networks that the terminal device is allowed to access and the capability information corresponding to the networks, and the capability information indicates whether each of all the networks that the terminal device is allowed to access supports the dual steer capability.

For example, the second request message may be a Nsoraf_SOR_Get request. The second response message may be a Nsoraf_SOR_Get response.

660: The UDM sends a first response message to the AMF.

In this application, the first response message carries the subscription data, and the subscription data includes the first information.

For example, based on the subscription data specifically requested by the AMF in the first request message, the first response message may further carry other information. For example, if the AMF requests access and mobility management data during registration, the subscription data further includes information such as mobility restriction information of the terminal device, a slice that the terminal device is allowed to access, and a data network name (data network name, DNN). If the AMF may request session-related information of the terminal device, and the terminal device has accessed a network and established a session before accessing the AMF, the UDM feeds back an SMF identifier and session information (for example, a slice or a DNN) to the AMF.

For example, the first response message may be a Nudm_SDM_Get response.

670: The AMF sends a registration response message to the terminal device, where the registration response message carries the subscription data.

In this application, the registration response message carries the subscription data, and the subscription data includes the first information.

For example, the subscription data may further include other information. For details, refer to the descriptions of step 660 for understanding. Details are not described again.

For example, the registration response message is a registration response.

Optionally, the method further includes 680: The terminal device selects, based on the received first information, to access the network that supports the dual steer capability.

In this application, the terminal device may select, based on the first information and a current service requirement of the terminal device, to access the network that supports the dual steer capability.

It should be understood that the terminal device in the method 600 provided in this application may be understood as any terminal device included in the dual steer device shown in FIG. 2. For example, the terminal device in the method 600 may be the terminal device #1 in FIG. 2, or may be the terminal device #2 in FIG. 2. This is not limited.

Based on the foregoing technical solution, in this application, when the terminal device supports the dual steer capability, the UDM may obtain the first information when determining that the terminal device supports the dual steer capability, where the first information may indicate the network that supports the dual steer capability and that is provided for the terminal device, and may send the first information to the terminal device via the AMF, so that the terminal device can select, based on the service requirement of the terminal device, to access the network that supports the dual steer capability. Compared with an existing solution in which all networks that can be accessed are provided for the terminal device, the technical solution in this application helps reduce signaling overhead and ensure service latency, thereby improving service experience of a user.

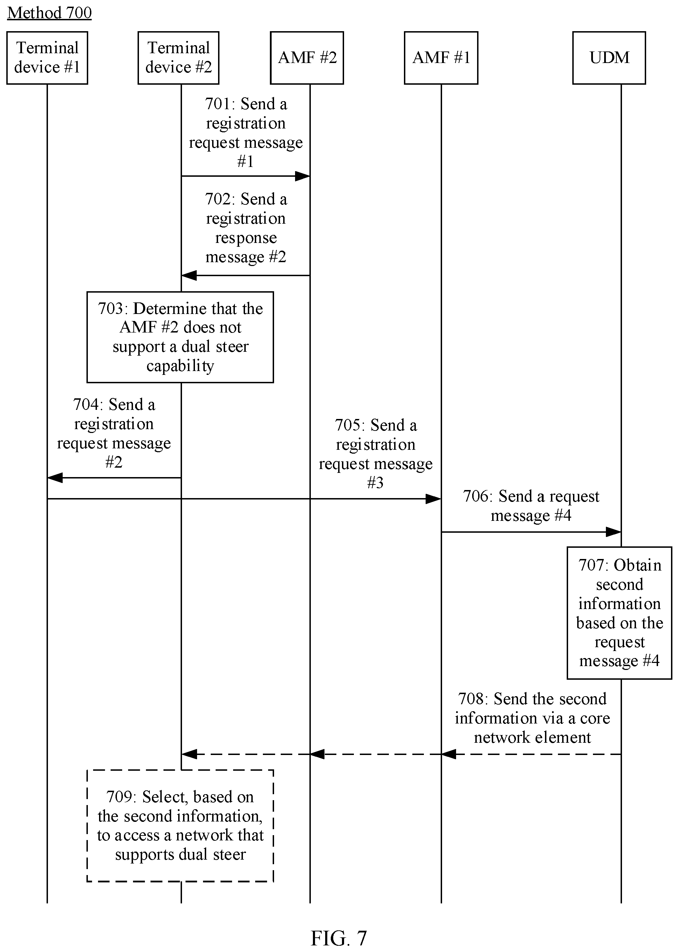

Further, in this application, if the terminal device #1 included in the dual steer device accesses an HPLMN that supports the dual steer capability, and the terminal device #2 in the dual steer device accesses a network that does not support the dual steer capability, how the terminal device #2 obtains the network that supports the dual steer capability is considered. Therefore, this application provides a communication method 700 to resolve the problem. As shown in FIG. 7, the method 700 includes the following steps.

701: A terminal device #2 sends a registration request message #1 to an AMF #2.

Correspondingly, the AMF #2 receives the registration request message #1 from the terminal device #2 (an example of a second terminal device).

In this application, the registration request message #1 is for requesting to register with a network. The registration request message #1 may carry an identifier of the terminal device #2 and capability information of the terminal device #2, where the capability information of the terminal device #2 indicates that the terminal device #2 supports a dual steer capability. Specifically, for information that may be further carried in the registration request #1, refer to the descriptions of step 610 in the method 600. Details are not described again.

702: The AMF #2 sends a registration response message #1 to the terminal device #2.

Correspondingly, the terminal device #2 receives the registration response message #1 from the AMF #2.

703: The terminal device #2 determines, based on the registration response message #1, that the AMF #2 (an example of a second AMF) does not support the dual steer capability.

For example, if the terminal device #2 finds, by parsing the received registration response message #1, that the registration response message #1 does not carry a response to the capability information reported by the terminal device #2, the terminal device #2 may determine that the AMF #2 does not support the dual steer capability.

704: The terminal device #2 sends a request message #2 to a terminal device #1.

Correspondingly, the terminal device #1 receives the request message #2 (an example of a third request message) from the terminal device #2.

In this application, the request message #2 is for requesting to provide, for the terminal device #2, a network that supports the dual steer capability. As described above, in this application, the terminal device #1 (an example of a first terminal device) and the terminal device #2 are in a dual steer device, subscription data of the terminal device #1 is associated with subscription data of the second terminal device #2, and the subscription data of the terminal device #1 and the subscription data of the terminal device #2 belong to a same public land mobile network PLMN.

705: The terminal device #1 sends a request message #3 (an example of a fourth request message) to an AMF #1.

Correspondingly, the AMF #1 receives the request message #3 from the terminal device #1.

In this application, the request message #3 carries the identifier of the terminal device #2, and the request message #3 is for requesting to provide, for the terminal device #2, the network that supports the dual steer capability.

In this application, a network element that provides a service for the terminal device #1 is the AMF #1 (an example of a first AMF).

706: The AMF #1 sends a request message #4 to a UDM.

Correspondingly, the UDM receives the request message #4 from the AMF #1.

In this application, the request message #4 (a fifth request message) carries the identifier of the terminal device #2, and the request message #4 is for requesting to provide, for the terminal device #2, the network that supports the dual steer capability.

707: The UDM obtains second information based on the request message #4.

In this application, the second information indicates the network that supports the dual steer capability and that is provided for the terminal device #2.

For example, the second information is a fourth list, the fourth list includes at least one network, and each network in the fourth list supports the dual steer capability. In a possible implementation, the fourth list does not include a network currently accessed by the terminal device #1. It is assumed that the network currently accessed by the terminal device #1 is a PLMN #2. In this case, the fourth list does not include the PLMN #2.

For example, the second information is fourth indication information, the fourth indication information indicates whether each network included in a fifth list supports the dual steer capability, and the fifth list includes all networks that the terminal device is allowed to access. For another example, the second information is the fifth list and the fourth indication information.

For example, the second information is a sixth list, the sixth list includes a mapping relationship between all networks that the terminal device is allowed to access and capability information corresponding to the networks, and the capability information indicates whether each of all the networks that the terminal device is allowed to access supports the dual steer capability. Details may be shown in Table 1.

Specifically, for a specific implementation in which the UDM obtains the second information, refer to the two solutions in which the UDM obtains the first information in the foregoing method 600. Details are not described again.

708: The UDM sends the second information to the terminal device #2 via a core network element.

In a possible implementation, the UDM may determine, based on the identifier of the terminal device #2 carried in the request message #4, in a context corresponding to the terminal device #2, that an AMF that provides a service for the terminal device #2 is the AMF #2; and then send a response message #2 (an example of a fourth response message) to the AMF #2, where the response message carries the second information. The AMF #2 sends a response message #3 (an example of a fifth response message) to the terminal device #2, where the response message carries the second information.

The second information is sent. In another possible implementation, the UDM may send the response message #3 to the AMF #1, where the response message carries the second information; the AMF #1 sends a response message #5 to the terminal device #1, where the response message carries the second information; and the terminal device #1 then sends a response message #6 (an example of a third response message) to the terminal device #2, where the response message carries the second information.

Optionally, the method further includes 709: The terminal device #2 selects, based on the received second information, to access the network that supports the dual steer capability.

In this application, the terminal device #2 may select, based on the second information and a current service requirement of the terminal device #2, to access the network that supports the dual steer capability.

Based on the foregoing technical solution, in this application, after the terminal device #2 in the dual steer device determines that a current network does not support the dual steer capability, the terminal device #2 may send a request message to the terminal device #1, to request to provide, for the terminal device #2, the network that supports the dual steer capability. The terminal device #2 may trigger the network to update a network list to the terminal device #2, so that the terminal device #2 can obtain the second information. The second information may indicate the network that supports the dual steer capability and that is provided for the terminal device #2, and the second information is sent to the terminal device #2 via the core network element, so that the terminal device #2 can select, based on a service requirement of the terminal device #2, to access the network that supports the dual steer capability. This reduces signaling overhead, and ensures service latency, thereby improving service experience of a user.

It should be understood that "predefine" in this application may be understood as define, define in advance, store, pre-store, pre-negotiate, preconfigure, build into, or pre-burn.

It may be understood that, in this application, both "when" and "if" mean that an apparatus performs corresponding processing in an objective case, but do not constitute any limitation on time, do not require the apparatus to necessarily have a determining action during implementation, and do not mean any other limitation.

It may be understood that, the term "and/or" in this specification merely describes an association relationship between associated objects, and indicates that three relationships may exist. For example, A and/or B may indicate the following three cases: Only A exists, both A and B exist, and only B exists. In addition, the character "/" in this specification generally indicates an "or" relationship between the associated objects.

The foregoing mainly describes the solutions provided in embodiments of this application from a perspective of interaction between nodes. It may be understood that, to implement the foregoing functions, the nodes, for example, the access and mobility management function network element, the terminal device, and the unified data management function network element, include corresponding hardware structures and/or software modules for performing the functions. A person skilled in the art may be aware that, in combination with units and algorithm steps in the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, each core network element may be divided into functional modules based on the foregoing method examples. For example, the functional modules may be obtained through division based on the corresponding functions, or two or more functions may be integrated into one processing module. The integrated module may be implemented in a form of hardware, or may be implemented in a form of software functional module. It should be noted that, in embodiments of this application, module division is an example, and is merely a logical function division. During actual implementation, another division manner may be used. An example in which the functional modules are obtained through division based on the corresponding functions is used below for description.

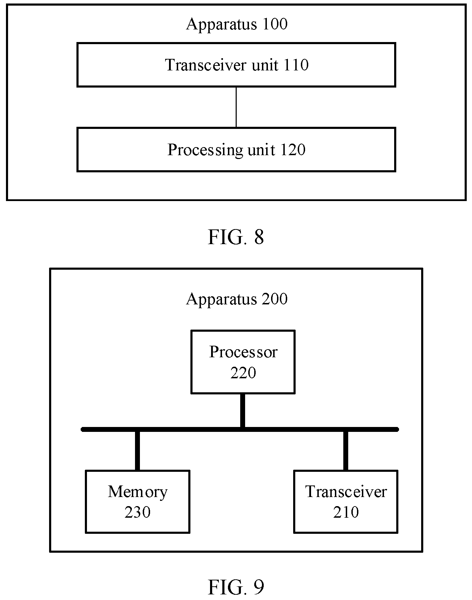

FIG. 8 is a block diagram of a communication apparatus 100 according to an embodiment of this application. As shown in the figure, the apparatus 100 may include a transceiver unit 110 and a processing unit 120.

In a possible design, the apparatus 100 may be the unified data management function network element in the foregoing method embodiments, or may be a chip configured to implement the function of the unified data management function network element in the foregoing method embodiments. It should be understood that the apparatus 100 may correspond to the unified data management function network element in the method 300 to the method 700 according to embodiments of this application, and the apparatus 100 may perform the steps corresponding to the unified data management function network element in the method 300 to the method 700 in embodiments of this application.

In an implementation, the transceiver unit is configured to receive a first request message from an access and mobility management function network element. The transceiver unit is further configured to send a first response message to the mobility management function network element.

In a possible implementation, the processing unit is configured to obtain first information based on the first request message.

In a possible implementation, the processing unit is configured to obtain the first information based on the first request message and configured capability information corresponding to each network.

In a possible implementation, the processing unit is configured to control, based on the first request message, the transceiver unit to send a second request message to a steering of roaming application function network element; the transceiver unit is configured to receive a second response message from the steering of roaming application function network element; and the processing unit is configured to obtain the first information based on a first list.

In a possible design, the apparatus 100 may be the access and mobility management function network element, the first access and mobility management function network element, or the second access and mobility management function network element in the foregoing method embodiments, or may be a chip configured to implement the function of the access and mobility management function network element, the first access and mobility management function network element, or the second access and mobility management function network element in the foregoing method embodiments. It should be understood that the apparatus 100 may correspond to the access and mobility management function network element, the first access and mobility management function network element, or the second access and mobility management function network element in the method 300 to the method 700 according to embodiments of this application, and the apparatus 100 may perform the steps corresponding to the access and mobility management function network element in the method 300 to the method 700 in embodiments of this application.

In a possible implementation, the transceiver unit is configured to receive a registration request message from a terminal device, and the processing unit is configured to control, based on the registration request message, the transceiver unit to send the first request message to the unified data management function network element; the transceiver unit is configured to receive the first response message from the unified data management function network element; and the transceiver unit is configured to send a registration response message to the terminal device.

In a possible implementation, the transceiver unit is configured to receive a fourth request message from a first terminal device; and the transceiver unit is configured to send a fifth request message to the unified data management function network element.

In a possible implementation, the transceiver unit is configured to receive a fourth response message from the unified data management function network element; and the transceiver unit is configured to send a fifth response message to a second terminal device.

In a possible design, the apparatus 100 may be the terminal device, the first terminal device, or the second terminal device in the foregoing method embodiments, or may be a chip configured to implement the function of the terminal device, the first terminal device, or the second terminal device in the foregoing method embodiments. It should be understood that the apparatus 100 may correspond to the terminal device in the method 300 to the method 700 according to embodiments of this application, and the apparatus 100 may perform the steps corresponding to the terminal device, the first terminal device, or the second terminal device in the method 300 to the method 700 in embodiments of this application.

In a possible implementation, the transceiver unit is configured to send the registration request message to the access and mobility management function network element, and the transceiver unit is configured to receive the registration response message from the mobility management function network element.

In a possible implementation, the transceiver unit is configured to receive a third request from the second terminal device; and the transceiver unit is configured to send the fourth request message to a first mobility management function network element.

In a possible implementation, the processing unit is configured to obtain the second information via the first terminal device; and the processing unit is configured to select, based on the second information, to access a network that supports a dual steer capability.

In a possible design, the apparatus 100 may be the steering of roaming application function network element in the foregoing method embodiments, or may be a chip configured to implement the function of the steering of roaming application function network element in the foregoing method embodiments. It should be understood that the apparatus 100 may correspond to the steering of roaming application function network element in the method 300 to the method 700 according to embodiments of this application, and the apparatus 100 may perform the steps corresponding to the steering of roaming application function network element in the method 300 to the method 700 in embodiments of this application.

In a possible implementation, the steering of roaming application function network element receives the second request message from the unified data management function network element; the processing unit is configured to determine the first list based on the second request message and the configured capability information corresponding to each network; and the processing unit is configured to send the second response message to the unified data management function network element.

In a possible implementation, the transceiver unit is configured to receive a sixth request message from the unified data management function network element; the processing unit is configured to determine a fourth list based on the sixth request message and the configured capability information corresponding to each network; and the transceiver unit is configured to send a fifth response message to the unified data management function network element.

It should be further understood that the apparatus 100 herein is embodied in a form of functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 100 may be specifically the first terminal device in the foregoing embodiments, and may be configured to perform the procedures and/or steps corresponding to the first terminal device in the foregoing method embodiments. Alternatively, the apparatus 100 may be specifically the second terminal device in the foregoing embodiments, and may be configured to perform the procedures and/or steps corresponding to the second terminal device in the foregoing method embodiments. To avoid repetition, details are not described herein again.

The apparatus 100 in the foregoing solutions has a function of implementing corresponding steps performed by each core network element in the foregoing methods, or the apparatus 100 in the foregoing solutions has a function of implementing corresponding steps performed by each core network element in the foregoing methods. The function may be implemented by hardware, or may be implemented by hardware executing corresponding software. The hardware or the software includes one or more modules corresponding to the foregoing functions. For example, the transceiver unit may be replaced by a transceiver machine (for example, a sending unit in the transceiver unit may be replaced by a transmitter machine, and a receiving unit in the transceiver unit may be replaced by a receiver machine), and another unit, for example, the processing unit, may be replaced by a processor, to separately perform receiving and sending operations and related processing operations in the foregoing method embodiments.

In addition, the transceiver unit 110 may alternatively be a transceiver circuit (for example, may include a receiving circuit and a sending circuit), and the processing unit may be a processing circuit.

It should be noted that the apparatus in FIG. 8 may be the network element or the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated into the chip. This is not limited herein.

FIG. 9 is a block diagram of a communication apparatus 200 according to an embodiment of this application. As shown in the figure, the apparatus 200 includes at least one processor 220. The processor 220 is coupled to a memory, and is configured to execute instructions stored in the memory, to transmit a signal and/or receive a signal. Optionally, the device 200 further includes a memory 230, configured to store instructions. Optionally, the device 200 further includes a transceiver 210, and the processor 220 controls the transceiver 210 to transmit a signal and/or receive a signal.

It should be understood that the processor 220 and the memory 230 may be integrated into one processing device. The processor 220 is configured to execute program code stored in the memory 230 to implement the foregoing functions. During specific implementation, the memory 230 may alternatively be integrated into the processor 220, or may be independent of the processor 220.

It should be further understood that the transceiver 210 may include a transceiver (or referred to as a receiver machine) and a transmitter (or referred to as a transmitter machine). The transceiver may further include an antenna, and there may be one or more antennas. The transceiver 210 may be a communication interface or an interface circuit.

Specifically, the transceiver 210 in the device 200 may correspond to the transceiver unit 110 in the device 100, and the processor 220 in the device 200 may correspond to the processing unit 120 in the device 200.

In a solution, the apparatus 200 is configured to implement operations performed by the unified data management function network element in the foregoing method embodiments.

For example, the processor 220 is configured to execute a computer program or the instructions stored in the memory 230, to implement the related operations of the unified data management function network element in the foregoing method embodiments, for example, the method performed by the unified data management function network element in any one of the embodiments shown in FIG. 3 to FIG. 7.

In a solution, the apparatus 200 is configured to implement operations performed by the access and mobility management function network element, the first access and mobility management function network element, and the second access and mobility management function network element in the foregoing method embodiments.

For example, the processor 220 is configured to execute the computer program or the instructions stored in the memory 230, to implement the related operations of the access and mobility management function network element, the first access and mobility management function network element, and the second access and mobility management function network element in the foregoing method embodiments, for example, the method performed by the access and mobility management function network element, the first access and mobility management function network element, and the second access and mobility management function network element in any one of the embodiments shown in FIG. 3 to FIG. 7.

In a solution, the apparatus 200 is configured to implement operations performed by the terminal device, the first terminal device, or the second terminal device in the foregoing method embodiments.

For example, the processor 220 is configured to execute the computer program or the instructions stored in the memory 230, to implement the related operations of the terminal device, the first terminal device, or the second terminal device in the foregoing method embodiments, for example, the method performed by the terminal device, the first terminal device, or the second terminal device in any one of the embodiments shown in FIG. 3 to FIG. 7.

In a solution, the apparatus 200 is configured to implement operations performed by the steering of roaming application function network element in the foregoing method embodiments.

For example, the processor 220 is configured to execute the computer program or the instructions stored in the memory 230, to implement the related operations of the steering of roaming application function network element in the foregoing method embodiments, for example, the method performed by the steering of roaming application function network element in any one of the embodiments shown in FIG. 3 to FIG. 7.

It should be understood that specific processes in which the transceiver and the processor perform the foregoing corresponding steps are described in detail in the foregoing method embodiments. For brevity, details are not described herein again.

During implementation, steps in the foregoing methods may be completed by using a hardware integrated logic circuit in the processor, or by using instructions in a form of software. The steps in the method disclosed with reference to embodiments of this application may be directly performed by a hardware processor, or may be performed by a combination of hardware in the processor and a software module. The software module may be located in a mature storage medium in the art, like a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. During implementation, steps in the foregoing method embodiments may be completed by using a hardware integrated logic circuit in the processor, or by using instructions in a form of software. The foregoing processor may be a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or a transistor logic device, or a discrete hardware component; and may implement or perform the methods, the steps, and logical block diagrams that are disclosed in embodiments of this application. The general-purpose processor may be a microprocessor, or the processor may be any conventional processor or the like. The steps in the methods disclosed in embodiments of this application may be directly performed and completed by a hardware decoding processor, or may be performed and completed by a combination of hardware in the decoding processor and a software module. The software module may be located in a mature storage medium in the art, like a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory of the systems and methods described in this specification includes but is not limited to these memories and any memory of another proper type.

According to the method provided in embodiments of this application, this application further provides a computer program product. The computer program product includes computer program code. When the computer program code is run on a computer, the computer is caused to perform the method performed by the access and mobility management function network element in any one of the embodiments of the method 200 to the method 700.

For example, when the computer program code is executed by a computer, the computer is caused to implement the method performed by the terminal device in the embodiments of the method 200 to the method 700.

For another example, when the computer program code is executed by a computer, the computer is caused to implement the method performed by a network slice admission control function network element in the embodiments of the method 200 to the method 700.

According to the method provided in embodiments of this application, this application further provides a computer-readable medium. The computer-readable medium stores program code. When the program code is run on a computer, the computer is caused to perform the method performed by the access and mobility management function network element, the terminal device, or the network slice admission control function network element in the foregoing embodiments.

According to the method provided in embodiments of this application, this application further provides a communication system, including a unified data management function network element, a first mobility management function network element, a second mobility management function network element, a first terminal device, and a second terminal device, and configured to perform the methods performed by the unified data management function network element, the first mobility management function network element, the second mobility management function network element, the first terminal device, and the second terminal device in any one of the embodiments of the method 200 to the method 700.

Optionally, the communication system further includes a steering of roaming application function network element. The steering of roaming application function network element is configured to perform the method performed by the steering of roaming application function network element in any one of the embodiments of the method 200 to the method 700.

For explanations and beneficial effects of related content in any one of the apparatuses provided above, refer to the corresponding method embodiment provided above. Details are not described herein again.

All or a part of the foregoing embodiments may be implemented by software, hardware, firmware, or any combination thereof. When the embodiments are implemented by software, all or a part of the embodiments may be implemented in a form of computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid state drive (solid state drive, SSD)), or the like.

In the foregoing apparatus embodiments, corresponding modules or units perform corresponding steps. For example, the transceiver unit (transceiver) performs a receiving or sending step in the method embodiments, and the processing unit (processor) may perform steps other than the sending and receiving steps. For a function of a specific unit, refer to a corresponding method embodiment. There may be one or more processors.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As shown in the figures, both a compute device and an application that runs on the compute device may be components. One or more components may reside within a process and/or an execution thread, and a component may be located on one computer and/or distributed between two or more computers. In addition, these components may be executed from various computer-readable media that store various data structures. For example, the components may communicate through a local and/or remote process and based on a signal having one or more data packets (for example, data from two components interacting with another component in a local system or a distributed system, and/or across a network, like an internet interacting with another system through the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, device, and unit, refer to a corresponding process in the foregoing method embodiments. Details are not described herein again.

In the several embodiments provided in this application, it should be understood that the disclosed system, device, and method may be implemented in other manners. For example, the described device embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of software functional unit and sold or used as an independent product, the functions may be stored in a computer-readable storage medium. Based on such an understanding, the technical solutions in this application essentially, or the part contributing to the conventional technology, or a part of the technical solutions may be implemented in a form of software product. The computer software product is stored in a storage medium, and includes several instructions for instructing a computer device (which may be a personal computer, a server, or a network device) to perform all or a part of the steps in the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
receiving, by a unified data management function network element, a first request message from an access and mobility management function network element, wherein the first request message is for requesting to obtain subscription data of a terminal device, and the first request message carries an identifier of the terminal device; and
sending, by the unified data management function network element, a first response message to the mobility management function network element when the terminal device supports a dual steer capability, wherein the first response message carries the subscription data, the subscription data comprises first information, and the first information indicates a network that supports the dual steer capability and that is provided for the terminal device.

2. The method according to claim 1, wherein the first information is a first list, the first list comprises at least one network, and each network in the first list supports the dual steer capability.

3. The method according to claim 2, wherein the first list is generated by the unified data management function network element, or the first list is generated by a steering of roaming application function network element.

4. The method according to claim 1, wherein the first information is second indication information, the second indication information indicates whether each network comprised in a second list supports the dual steer capability, and the second list comprises all networks that the terminal device is allowed to access.

5. The method according to claim 4, wherein
the second indication information is generated by the unified data management function network element based on configured capability information corresponding to each network; or
the second indication information is generated based on a first list and the stored second list, the first list comprises at least one network, each network in the first list supports the dual steer capability, and the second list comprises all the networks that the terminal device is allowed to access.

6. The method according to claim 1, wherein the first information is a third list, the third list comprises a mapping relationship between all networks that the terminal device is allowed to access and capability information corresponding to the networks, and the capability information indicates whether each of all the networks that the terminal device is allowed to access supports the dual steer capability.

7. The method according to claim 6, wherein
the third list is generated by the unified data management function network element based on configured capability information corresponding to each network; or
the third list is generated based on a first list and a stored second list, the first list comprises at least one network, each network in the first list supports the dual steer capability, and the second list comprises all the networks that the terminal device is allowed to access.

8. The method according to any one of claims 1 to 7, wherein the method further comprises:
obtaining, by the unified data management function network element, the first information based on the first request message.

9. The method according to claim 8, wherein the capability information corresponding to each network is configured on the unified data management function network element, and the capability information corresponding to each network indicates whether the network supports the dual steer capability; and
obtaining, by the unified data management function network element, the first information based on the first request message comprises:
obtaining, by the unified data management function network element, the first information based on the first request message and the configured capability information corresponding to each network.

10. The method according to claim 9, wherein sending, by the unified data management function network element, the first response message to the mobility management function network element when the terminal device supports the dual steer capability comprises:
when the terminal device supports the dual steer capability and a first network does not support the dual steer capability, sending, by the unified data management function network element, the first response message to the mobility management function network element, wherein the first network is a network that currently provides a service for the terminal device.

11. The method according to claim 8, wherein the capability information corresponding to each network is configured on the steering of roaming application function network element, and the capability information corresponding to each network indicates whether the network supports the dual steer capability; and
obtaining, by the unified data management function network element, the first information based on the first request message comprises:
sending, by the unified data management function network element, a second request message to the steering of roaming application function network element based on the first request message, wherein the second request message carries the identifier of the terminal device and first indication information, and the first indication information indicates that the second request message is for requesting to obtain the network that supports the dual steer capability and that is provided for the terminal device;
receiving, by the unified data management function network element, a second response message from the steering of roaming application function network element, wherein the second response message carries the first list, the first list comprises the at least one network, each network in the first list supports the dual steer capability, and the first list is determined by the steering of roaming application function network element based on the second request message and the configured capability information corresponding to each network; and
obtaining, by the unified data management function network element, the first information based on the first list.

12. A communication method, wherein the method comprises:
receiving, by an access and mobility management function network element, a registration request message from a terminal device, wherein the registration accept message carries an identifier of the terminal device, and the terminal device supports a dual steer capability;
sending, by the access and mobility management function network element, a first request message to a unified data management function network element based on the registration request message, wherein the first request message is for requesting to obtain subscription data of the terminal device, and the first request message carries the identifier of the terminal device;
receiving, by the mobility management function network element, a first response message from the unified data management function network element, wherein the first response message carries the subscription data, the subscription data comprises first information, and the first information indicates a network that supports the dual steer capability and that is provided for the terminal device; and
sending, by the mobility management function network element, a registration response message to the terminal device, wherein the registration response message carries the subscription data.

13. The method according to claim 12, wherein the first information is a first list, the first list comprises at least one network, and each network in the first list supports the dual steer capability.

14. The method according to claim 12, wherein the first information is second indication information, the second indication information indicates whether each network comprised in a second list supports the dual steer capability, and the second list comprises all networks that the terminal device is allowed to access.

15. The method according to claim 12, wherein the first information is a third list, the third list comprises a mapping relationship between all networks that the terminal device is allowed to access and capability information corresponding to the networks, and the capability information indicates whether each of all the networks that the terminal device is allowed to access supports the dual steer capability.

16. A communication method, comprising:
receiving, by a steering of roaming application function network element, a second request message from a unified data management function network element, wherein the second request message carries an identifier of a terminal device and first indication information, the first indication information indicates that the second request message is for requesting to obtain a network that supports a dual steer capability and that is provided for the terminal device, capability information corresponding to each network is configured on the steering of roaming application function network element, and the capability information corresponding to each network indicates whether the network supports the dual steer capability;
determining, by the steering of roaming application function network element, a first list based on the second request message and the configured capability information corresponding to each network; and
sending, by the steering of roaming application function network element, a second response message to the unified data management function network element, wherein the second response message carries the first list, the first list comprises at least one network, and each network in the first list supports the dual steer capability.

17. A communication method, wherein the method comprises:
sending, by a terminal device, a registration request message to an access and mobility management function network element, wherein the registration accept message carries an identifier of the terminal device, and the terminal device supports a dual steer capability; and
receiving, by the terminal device, a registration response message from the mobility management function network element, wherein the registration response message carries subscription data, the subscription data comprises first information, and the first information indicates a network that supports the dual steer capability and that is provided for the terminal device.

18. The method according to claim 17, wherein the first information is a first list, the first list comprises at least one network, and each network in the first list supports the dual steer capability.

19. The method according to claim 17, wherein the first information is second indication information, the second indication information indicates whether each network comprised in a second list supports the dual steer capability, and the second list comprises all networks that the terminal device is allowed to access.

20. The method according to claim 17, wherein the first information is a third list, the third list comprises a mapping relationship between all networks that the terminal device is allowed to access and capability information corresponding to the networks, and the capability information indicates whether each of all the networks that the terminal device is allowed to access supports the dual steer capability.

21. A communication apparatus, wherein the communication apparatus comprises a module or unit configured to perform the method according to any one of claims 1 to 11, or the communication apparatus comprises a module or unit configured to perform the method according to any one of claims 12 to 15, or the communication apparatus comprises a module or unit configured to perform the method according to claim 16, or the communication apparatus comprises a module or unit configured to perform the method according to any one of claims 17 to 20.

22. A communication apparatus, wherein the communication apparatus comprises a processor and a memory, the memory is configured to store a computer program or instructions, and the processor is configured to execute the computer program or the instructions in the memory, so that the method according to any one of claims 1 to 11, claims 12 to 15, claim 16, or claims 17 to 20 is performed.

23. A communication system, wherein the communication system comprises a unified data management function network element, a mobility management function network element, and a terminal device, wherein the unified data management function network element is configured to perform the method according to any one of claims 1 to 11, the mobility management function network element is configured to perform the method according to any one of claims 12 to 15, and the terminal device is configured to perform the method according to any one of claims 17 to 20.

24. The communication system according to claim 23, wherein the communication system further comprises a steering of roaming application function network element, and the steering of roaming application function network element is configured to perform the method according to claim 16.

25. A computer-readable storage medium, wherein the computer-readable storage medium stores a computer program, and when the computer program runs on a computer, the computer is caused to perform the method according to any one of claims 1 to 11, claims 12 to 15, claim 16, or claims 17 to 20.

26. A computer program product, wherein the computer program product comprises the method according to any one of claims 1 to 11, claims 12 to 15, claim 16, or claims 17 to 20.
